# EUROPEAN PATENT APPLICATION

(11) **EP 1 418 498 A2**
(43) Date of publication of application: **12.05.2004**
(21) Application number: 03025404.9
(22) Date of filing: 05.11.2003
(51) Int. Cl.: G06F 9/44

(54) **Multi-window display device, multi-window managing method, and display control program**

(30) Priority: 11.11.2002 JP 2002327454
(71) Applicant: NEC CORPORATION, Tokyo (JP)
(72) Inventor: Tomimori, Hiroyuki, Tokyo (JP)
(74) Representative: Glawe. Delfs. Moll

(57) **Abstract**

A multi-window display device is provided which is capable of preventing interference with each other in displaying of two or more windows (W1, W2, and W3) caused by a window control request from any one of two or more application programs (AP1, AP2, and AP3). A window manager (12) judges whether or not a window control request from the application program corresponding to any one of two or more windows (W1, W2, and W3) being displayed on a display section (13) is allowed to be executed, based on preset display priority of the application program that has made a window control request and, if a result of the judgement shows that the request is allowed to be executed, executes the window control request and preferentially displays the any one of two or more windows (W1, W2, and W3) and, if the result of the judgement shows that the request is not allowed to be executed, neglects the window control request.

## Description

### BACKGROUND OF THE INVENTION

### Field of the Invention

The present invention relates to a multi-window display device, a multi-window managing method to be used in the multi-window display device, and a display control program, and more particularly to the multi-window display device that can be suitably used in the case where a whole of a display screen is occupied by one window such as a case of the display screen of a portable cellular phone, the multi-window managing method to be used in the multi-window display device and the display control program.

The present application claims priority of Japanese Patent Application No. 2002-327454 filed on November 11, 2002, which is hereby incorporated by reference.

### Description of the Related Art

A conventional multi-window display device to display a screen having a plurality of windows, such as a personal computer, a portable cellular phone, or a like is provided with a window manger adapted to display, in response to window control requests from two and more application programs, each of windows on a display device by having the windows overlap one another while controlling display priority of each of the windows. The window manager controls a state of overlapping of each of the windows, size of each of the windows, change of display location on a screen, or a like based on explicit operations of a user and on window control requests from applications, each of which is operating the corresponding window.

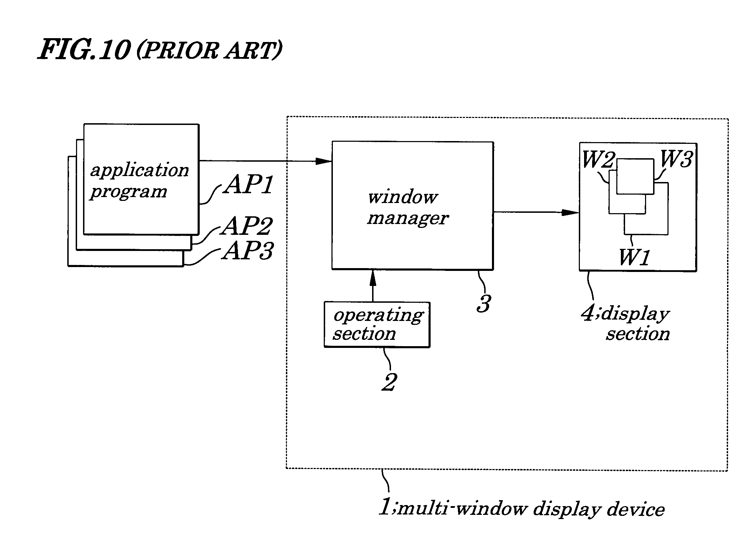

Figure 10 shows a schematic block diagram of configurations of a conventional multi-window device of this kind. The multi-window display device 1 shown in Fig. 10 includes an operating section 2, a window manager 3, and a display section 4. The operating section 2 has a transmitting button, switching button for an alphabetical character, kana character, kanji character, and numeric character, power ON/OFF button, cross button for cursor operations, exit button, or a like. The window manager 3 displays, in response to window control requests from application programs AP1, AP2, and AP3, each of windows W1, W2, and W3 on the display section 4 by having the windows overlap one another while controlling display priority of each of the windows W1, W2, and W3. The display section 4 displays the windows W1, W2, and W3 each corresponding to each of the application programs AP1, AP2, and AP3 by having the windows W1, W2, and W3 overlap one another.

Another conventional multi-window display device is disclosed in Japanese Patent Application Laid-open No. Hei 5-233195 (Page 1, Figs. 1 to 5) in which, when, for example, a serious failure occurs in an application program that controls a second window being hidden under a first window, a place of the second window is changed to a place depending on importance designated by the application program and a display content is displayed at the changed place. This prevents a user from overlooking important information about the second window.

Moreover, in a portable cellular phone disclosed in Japanese Patent Application Laid-open No. 2002-111805 (Page 1, Figs. 1 to 15), timing of graphics-drawing of display screens corresponding to various functions is controlled by a window manager and change of a screen having various functions is controlled based on a management content of a history managing unit to manage a history of the display screen and of a display priority managing unit to manage priorities for displaying a screen. This can avoid increased memory capacity and complicated control on changes of screens each performing various functions and enables easy change of the screens each performing various functions.

However, the conventional multi-window display device shown in Fig. 10 has a problem. That is, if the multi-window display device 1 has a terminal whose screen size is limited or whose operating method employed at time of inputting data is limited, for example, as in the case of a portable cellular phone, many difficulties are found when a user operates the multi-window display device 1 by designating one of the windows W1, W2, and W3 and there are some cases where, when many window control requests are made by simultaneous operations of the application programs AP1, AP2, and AP3, a window for an other application program is abruptly displayed on a window operating for an application program being presently used by a user, which causes interference in displaying of the currently engaged application program. Because of this, such a terminal as the portable cellular phone in which a whole of a display screen is covered by one window presents a big problem.

To solve this problem, a method is proposed in which such a window control request as may cause a problem is not made by cooperation among the application programs AP1, AP2 and AP3. However, this method also presents a problem in that this method becomes difficult to be applied as a number of application programs increases and in that an arrangement has to be newly designed in which a user can know a state of other application program using an application program, which causes configurations to be complicated.

Moreover, clear description of technology to prevent the other application program from interfering with the currently used application program in displaying of the windows is not disclosed in the above Japanese Patent Application Laid-open Nos. Hei - 233195 and 2002 - 111805.

### SUMMARY OF THE INVENTION

In view of the above, it is an object of the present invention to provide a multi-window display device which enables a window control request from one application to be made irrespective of a state of an other application and interference with each other in displaying of windows at a present time caused by the window control request from the one application to be avoided, a multi-window managing method to be used in the above multi-window display device, and a display control program.

According to a first aspect of the present invention, there is provided a multi-window display device including:
a display device;
a window manager to display, in response to a window control request from any one of two and more application programs, each of which corresponds to any one of two or more windows in a one-to-one relationship, the two or more windows on the display device by having the two or more windows overlap one another while controlling display priority of each of the two or more windows; and
wherein the window manager judges whether a window control request from the application program corresponding to any one of the two or more windows being displayed is allowed to be executed or not, based on preset display priority of the application program that has made the window control request and, if a result of the judgement shows that the window control request is allowed to be executed, executes the window control request and preferentially displays the any one of the two or more windows and, if the result of the judgement shows that the window control request is not allowed to be executed, neglects the window control request.

In the foregoing first aspect, a preferable mode is one wherein the window manager includes:
an application information managing section to manage display priority of each of the application programs and each of the two or more windows;
a window state managing section to mange a present state of overlapping of each of the two or more windows in a display screen of the display device;
a request judging section judges, based on the display priority managed by the application information managing section and on a present state of overlapping of each of the two or more windows being managed by the window state managing section, whether or not the window control request from the application program is allowed to be executed; and
a window control section controls each of the two or more windows on the display screen of the display device based on the result of the judgement.

Another preferable mode is one wherein the request judging section, when the display priority of the application program that has made the window control request is higher than that of a window being displayed in a highest location on the display screen of the display device, produces a result from the judgement that the window control request is allowed to be executed and when the display priority of the application program that has made the window control request is lower than that of the window being displayed in a highest location on the display screen of the display device, produces a result from the judgement that the window control request is not allowed to be executed.

According to a second aspect of the present invention, there is provided a multi-window display device including:
a display device;
a window manager to display, in response to a window control request from any one of two and more application programs, each of which corresponds to any one of two or more windows in a one-to-one relationship, the two or more windows on the display device by having the two or more windows overlap one another while controlling display priority of each of the two or more windows; and
wherein the window manager judges whether or not a window control request from the application program corresponding to any one of the two or more windows being displayed is allowed to be executed, based on preset display priority of the application program that has made the window control request, and on a function of a display mode to instruct a window to be displayed or not to be displayed and, if a result of the judgement shows that the window control request is allowed to be executed, executes the window control request and preferentially displays the any one of the two or more windows and, if a result of the judgement shows that the window control request is not allowed to be executed, neglects the window control request.

In the foregoing second aspect, a preferable mode is one wherein the window manager includes:
an application information managing section to manage display priority of each of the application programs and each of the two or more windows;
a window state managing section to mange a present state of overlapping of each of the two or more windows on a display screen of the display device and the display mode;
a request judging section judges, based on the display priority being managed, a present state of overlapping of each of the two or more windows being managed, and the display mode being managed, whether or not the window control request from the application program is allowed to be executed; and
a window control section controls each of the two or more windows on the display screen of the display device based on the result of the judgement.

Another preferable mode is one wherein the request judging section, when the display priority of the application program that has made the window control request is higher than that of a window being displayed in a highest location on the display screen of the display device and a function of the display mode instructs a window to be displayed, produces a result from the judgement that the window control request is allowed to be executed and when the display priority of the application program that has made the window control request is lower than that of the window being displayed in a highest location on the display screen of the display device or the function of the display mode instructs the window not to be displayed, produces a result from the judgement that the window control request is not allowed to be executed.

According to a third aspect of the present invention, there is provided a multi-window managing method being used in a multi-window display device having a display device and a window manager to display, in response to a window control request from any one of two and more application programs, each of which corresponds to any one of two or more windows in a one-to-one relationship, the two or more windows on the display device by having the two or more windows overlap one another while controlling display priority of each of the two or more windows, for managing a state of overlapping of each of the two or more windows, the multi-window managing method including;
a step of judging whether a window control request from the application program corresponding to any one of the two or more windows being displayed on the display device is allowed to be executed or not, based on preset display priority of the application program that has made the window control request and, if a result of the judgement shows that the window control request is allowed to be executed, executing the window control request and preferentially displaying the any one of the two or more windows and, if the result of the judgement shows that the window control request is not allowed to be executed, neglecting the window control request.

According to a fourth aspect of the present invention, there is provided a multi-window managing method being used in a multi-window display device having a display device and a window manager to display, in response to a window control request from any one of two and more application programs, each of which corresponds to any one of two or more windows in a one-to-one relationship, the two or more windows on the display device by having the two or more windows overlap one another while controlling display priority of each of the two or more windows, for managing a state of overlapping of each of the two or more windows, the multi-window managing method including;
a step of judging whether or not a window control request from the application program corresponding to any one of the two or more windows being displayed on a screen of the display section is allowed to be executed, based on preset display priority of the application program that has made the window control request and on a function of a display mode to instruct a window to be displayed or not to be displayed and, if a result of the judgement shows that the window control request is allowed to be executed, executing the window control request and preferentially displaying the any one of the two or more windows and, if a result of the judgement shows that the window control request is not allowed to be executed, neglecting the window control request.

According to a fifth aspect of the present invention, there is provided a display control program to have a computer achieve a multi-window managing method being used in a multi-window display device having a display device and a window manager to display, in response to a window control request from any one of two and more application programs, each of which corresponds to any one of two or more windows in a one-to-one relationship, the two or more windows on the display device by having the two or more windows overlap one another while controlling display priority of each of the two or more windows, for managing a state of overlapping of each of the two or more windows, the multi-window managing method including;
a step of judging whether a window control request from the application program corresponding to any one of the two or more windows being displayed on the display device is allowed to be executed or not, based on preset display priority of the application program that has made the window control request and, if a result of the judgement shows that the window control request is allowed to be executed, executing the window control request and preferentially displaying the any one of the two or more windows and, if the result of the judgement shows that the window control request is not allowed to be executed, neglecting the window control request.

According to a sixth aspect of the present invention, there is provided a display control program to have a computer achieve a multi-window managing method being used in a multi-window display device having a display device and a window manager to display, in response to a window control request from any one of two and more application programs, each of which corresponds to any one of two or more windows in a one-to-one relationship, the two or more windows on the display device by having the two or more windows overlap one another while controlling display priority of each of the two or more windows, for managing a state of overlapping of each of the two or more windows, the multi-window managing method including;
a step of judging whether or not a window control request from the application program corresponding to any one of the two or more windows being displayed on a screen of the display section is allowed to be executed, based on preset display priority of the application program that has made the window control request and on a function of a display mode to instruct a window to be displayed or not to be displayed and, if a result of the judgement shows that the window control request is allowed to be executed, executing the window control request and preferentially displaying the any one of the two or more windows and, if a result of the judgement shows that the window control request is not allowed to be executed, neglecting the window control request.

With above configurations, the window manager judges whether or not a window control request from each of application programs corresponding to each of windows being displayed on the display device is allowed to be executed, based on preset display priority of an application program that has originally made a window control request and, if a result of the judgement shows that the window control request is allowed to be executed, executes the window control request and preferentially displays a window corresponding to the application program that has originally made the window control request and, if the result of the judgement shows that the window request is not allowed to be executed, neglects the window control request and, therefore, display interference with each other caused by executing the window control request can be prevented. As a result, since each of the application programs, when making a window control request, needs not to know states of other application programs, complicated configurations can be avoided.

With another configuration, since the window state managing section is additionally provided with the function of the display mode for displaying of windows, no window having been instructed by the function not to be displayed appears on the screen, which enables smooth displaying of the windows.

### BRIEF DESCRIPTION OF THE DRAWINGS

The above and other objects, advantages, and features of the present invention will be more apparent from the following description taken in conjunction with the accompanying drawings in which:
Fig. 1 is a schematic block diagram showing electrical configurations of a multi-window display device according to a first embodiment of the present invention;
Fig. 2 is a diagram showing information being managed by an application information managing section of Fig. 1;
Figs. 3A, 3B, and 3C are diagrams showing information being managed by a window state managing section of Fig. 1,
Fig. 4 is a flowchart explaining operations of the multi-window display device of Fig. 1;
Fig. 5 is also a flowchart explaining operations of the multi-window display device of Fig. 1;
Fig. 6 is a schematic block diagram showing electrical configurations of a multi-window display device according to a second embodiment of the present invention;
Fig. 7 is a diagram showing information being managed by a window state managing section of Fig. 6;
Fig. 8 is a flowchart explaining operations of the multi-window display device of Fig. 6;
Fig. 9 is a flowchart explaining operations of the multi-window display device of Fig. 6; and
Fig. 10 is a schematic block diagram showing electrical configurations of a conventional multi-window device.

### DETAILED DESCRIPTION OF THE PREFERRED EMBODIMENTS

Best modes of carrying out the present invention will be described in further detail using various embodiments with reference to the accompanying drawings.

### First Embodiment

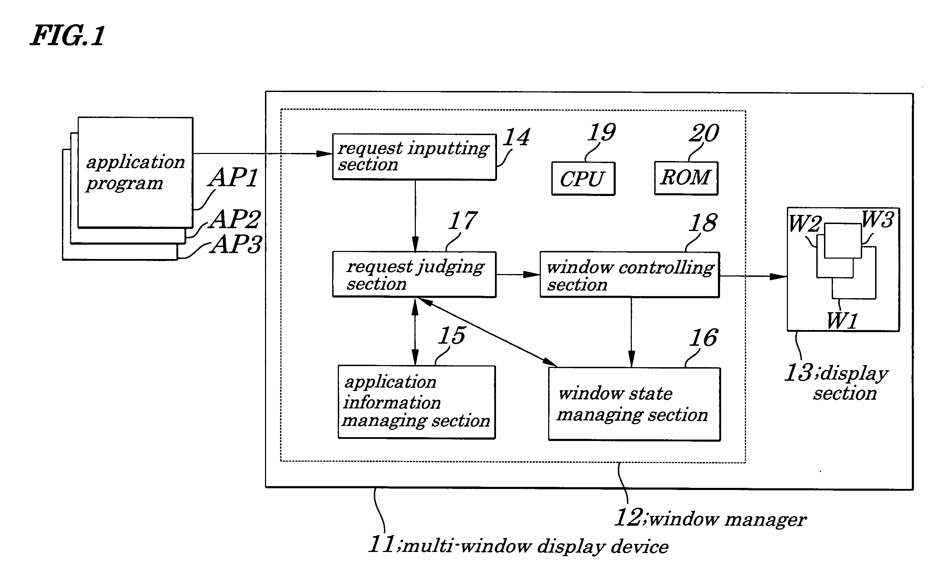

Figure 1 is a schematic block diagram showing electrical configurations of a multi-window display device 11 according to a first embodiment of the present invention. The multi-window display device 11 of the first embodiment is, for example, a portable cellular phone (not shown) and, as shown in Fig.1, includes a window manager 12 and a display section 13. The window manager 12 displays, in response to window control requests (for example, an order of overlapping of each of the windows W1, W2, and W3, size of each of windows W1, W2, and W3, change of display locations, or a like) from application programs AP1, AP2, and AP3, each of the windows W1, W2, and W3 by having them overlap one another while controlling their display priority to the display section 13. In the embodiment in particular, the window manger 12 is constructed so as to judge whether a window control request from each of the application programs AP1, AP2, and AP3 corresponding to each of the windows W1, W2, and W3 being displayed on the display section 13 is allowed to be executed or not, based on preset display priority of an application program that has originally made a window control request and, if a result from the judgement shows that the window control request is allowed to be executed, so as to execute the window control request and to preferentially display a window (one of W1, W2 or W3) corresponding to the application program that has originally made the window control request and, if the result from the judgement shows that the window control request is not allowed be executed, so as to neglect the window control request.

The window manager 12 includes a request inputting section 14, an application information managing section 15, a window state managing section 16, a request judging section 17, a window controlling section 18, a CPU (Central Processing Unit) 19, and a ROM (Read Only Memory) 20. The request inputting section 14 receives a window control request from each of application programs AP1, AP2, and AP3. The application information managing section 15 manages each of the application programs AP1, AP2, and AP3 and display priority of each of the windows W1, W2, and W3. The window state managing section 16 manages a present state of overlap among various kinds of the windows W1, W2, and W3 on the display screen in the display section 13.

The request judging section 17, based on display priority being managed by the application information managing section 15 and on a present state of overlap among various kinds of the windows W1, W2, and W3 being managed by the window state managing section 16, judges whether or not a window control request from each of the application programs AP1, AP2, and AP3 is allowed to be executed and obtains a result from the judgement. In the first embodiment in particular, the request judging section 17, when display priority preset for an application program, any one of W1, W2, or W3, that has originally made a window control request is higher than that of another window, any one of W2, W3, or W1, being displayed in a highest position on a display screen of the display section 13, produces a result from the judgement showing that the window control request is allowed to be executed and, when the former is lower than the latter, produces a result from the judgement that the window control request is not allowed to be executed.

The window controlling section 18, based on the result from the above judgement, controls each of the windows W1, W2, and W3 on the display screen (not shown) of the display section 13. The CPU 19 controls a whole of the window manager 12. The ROM 20 stores a control program to operate the CPU 19 and, in the first embodiment in particular, a display control program to have the CPU 19 perform a function of the multi-window display device 11. The display section 13 displays each of the windows W1, W2, and W3 according to control exerted by the window controlling section 18.

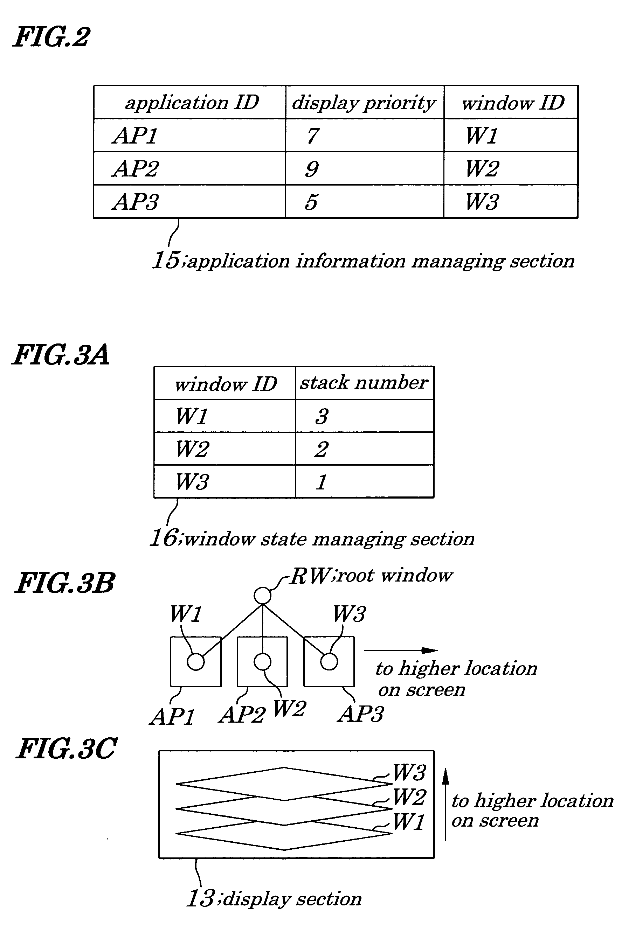

Figure 2 is a diagram showing information being managed by the application information managing section 15 of Fig. 1. In the application information managing section 15, application identifications (hereinafter referred to as application IDs (AP1, AP2, and AP3) ) , display priority of each of application programs AP1, AP2, and AP3, and window identifications (hereinafter referred to as window IDs (W1, W2, and W2)) being managed by each of the application programs AP1, AP2, and AP3. The smaller a value of the display priority is, the higher the display priority is.

Figures 3A, 3B, and 3C are diagrams showing information being managed by the window state managing section 16 of Fig. 1. In the window state managing section 16, as shown in Fig. 3A, the window IDs (W1, W2, and W3) and stack numbers corresponding to each of the window IDs are managed. The stack number indicates a position of each of the windows W1, W2, and W3 counted from a highest location (level), that is, a front position on the screen, that is, the stack number 1 shows that the corresponding window W3, W2, or W1 is placed in a highest location on the screen, and the stack number 2 shows that the corresponding window W2, W1, or W3 is placed to hide partially or wholly just behind the window W3, W2, or W1 having the stack number 1 on the screen. Similarly, the stack number 3 shows that the corresponding window W1, W3, or W2 is placed to hide partially or wholly just behind the window W2, W1, or W3 having the stack number 2 on the screen. In this case, as shown in Fig. 3B, control is exerted by a root window RW so that each of the windows W1, W2, and W3 corresponding to application programs AP1, AP2, and AP3 respectively is placed in order from a lower to higher location on the screen. Then, as shown in Fig. 3C, each of the windows W1, W2, and W3 is displayed on the display section 13.

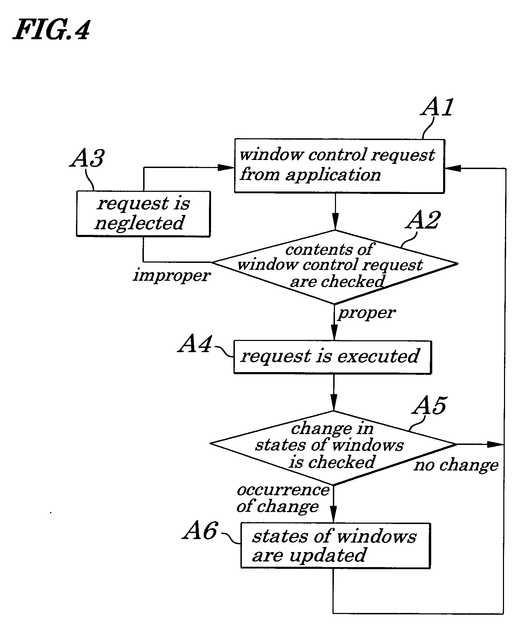

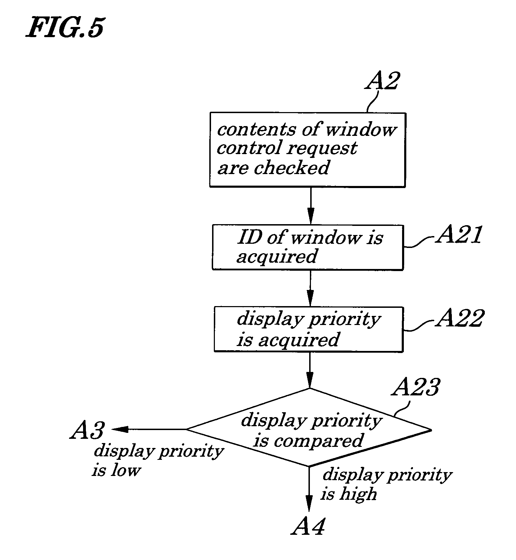

Figures 4 and 5 are flowcharts explaining operations of the multi-window display device 11 of Fig. 1. Processing contents of the multi-window managing method of the first embodiment are described by referring to Figs. 4 and 5. For example, when a widow control request asking the window W1 placed in a lowest location on the screen to be moved to its highest location from the application program AP1 occurs in the window manager 12, the request inputting section 14 in the window manager 12 receives the window control request from the application program AP1 and transfers it to the request judging section 17 (Step A1).

The request judging section 17 judges whether or not the window control request from the application program AP1 is allowed to be executed (Step A2). The request judging section 17, when judging that, if the window control request is executed, a problem occurs (that is, when judging the execution to be improper), neglects the window control request (Step A3) and waits for a new window control request from the application programs AP1, AP2, and AP3 (Step A1). The request judging section 17, when judging that, even if the window control request is executed, no problem occurs (that is, when judging the execution to be proper), transmits contents of the window control request to the window controlling section 18 so as to execute the window control request (Step A4).

The request judging section 17, after having executed the window control request, checks change in a state of each of the windows W1, W2, and W3 (Step A5) and, if no change has occurred, terminates the processing and waits for a new window control request from the application programs AP1, AP2, and AP3 (Step A1). The request judging section 17, when change has occurred in a state of each of the windows W1, W2, and W3, transmits information indicating occurrence of the change to the window state managing section 16. The window state managing section 16 then updates information about stack number as shown in Fig. 3A (Step A6) and waits for a new window control request from application programs AP1, AP2, and AP3 (Step A1).

In the Step A2 described above, as shown in Fig. 5 and Fig. 3A, the request judging section 17 acquires an ID (W3) of the window corresponding to a smallest stack number (that is, highest location on the screen) from the window state managing section 16 (Step A21). Next, the request judging section 17 acquires, from the application information managing section 15, display priority "5" of the application program (AP3) to which the window W3 belongs and display priority "7" of the application program (AP1) to which the window W1 belongs (Step A22), as shown in Fig. 2 and compares the acquired display priorities "5" and "7"(Step A23).

As a result, when the display priority of the application program AP1 is higher than the display priority of the application program AP3, the request judging section 17 judges that execution of the request from the application program AP1 causes no problem and, if the above display priority is lower than the above display priority, judges that execution of the request causes interference in displaying of the application program having higher display priority and therefore the window control request should not be executed.

In the first embodiment, as shown clearly in Fig. 2, the display priority of the application program AP3 being displayed in the highest location on the screen is allotted "5" and the display priority of the application program AP1 to which the window W1 belongs is allotted "7", the request judging section 17 judges that the window control request from the application program AP1 should not be executed.

Thus, in the first embodiment, the window manager 12 judges whether or not the window control request from each of the application programs AP1, AP2, and AP3 corresponding to each of the windows W1, W2, and W3 being displayed on the display section 13 is allowed to be executed, based on preset display priority of the application program that has originally made the window control request and, if a result of the judgement shows that the window control request is allowed to be executed, executes the window control request and preferentially displays the window ( one of W1, W2, and W3) corresponding to the application program that has originally made the window control request and, if the result of the judgement shows that the window control request is not allowed to be executed, neglects the window control request and, therefore, display interference caused by executing the window control request can be prevented. As a result, since each of the application programs AP1, AP2, and AP3, when making a window control request, needs not to know states of other application programs, complicated configurations can be avoided.

### Second Embodiment

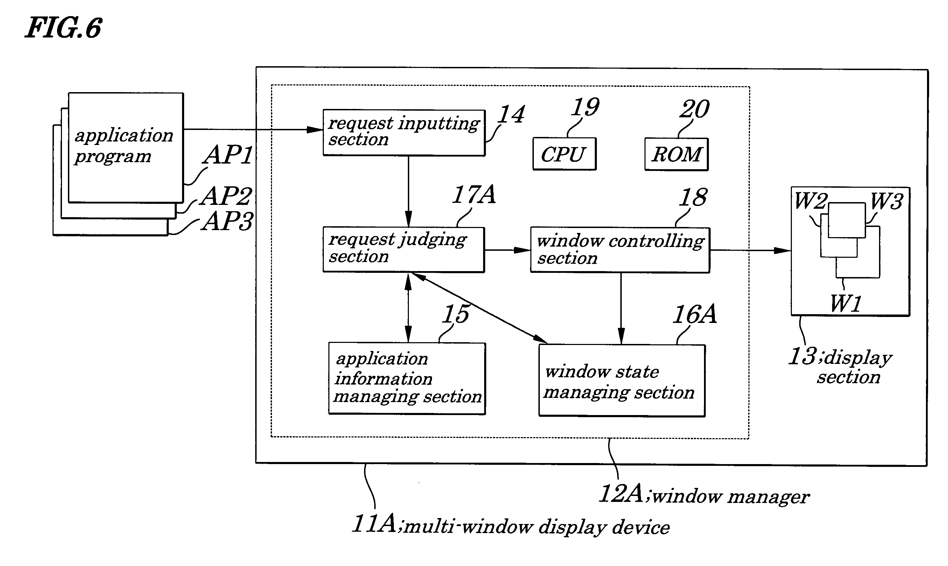

Figure 6 is a schematic block diagram showing electrical configurations of a multi-window display device (11A) according to a second embodiment of the present invention. In Fig. 6, same reference numbers are assigned to parts having same functions as those in the first embodiment shown in Fig. 1 and their descriptions are omitted accordingly. The multi-window display device 11A of the second embodiment shown in Fig. 6 includes a window manager 12A having configurations being different from those of the window manager 12 shown in Fig. 1. The window manager 12A judges whether or not a window control request from each of application programs AP1, AP2, and AP3 corresponding to each of windows W1, W2, and W3 being displayed on the screen of a display section 13 is allowed to be executed, based on preset display priority of an application program that has originally made the request and on a function of a "display mode" adapted to instruct a window "to be displayed or not to be displayed" and, if the result of the judgement shows that the window control request is allowed to be executed, executes the window control request and preferentially displays the window W1, W2, or W3 corresponding to the application program AP1, AP2, or AP3 that has originally made the request and, if the result of the judgement shows that the window control request is not allowed to be executed, neglects the window control request.

The window manager 12A shown in Fig. 6 includes a window state managing section 16A having configurations being different from those of the window state managing section 16 in Fig. 1 and a request judging section 17A having configurations being different from those of the request judging section 17 in Fig. 1. The window state managing section 16A manages a present state of overlapping of each of the windows W1, W2, and W3 on the screen (not shown) of the display section 13 and the display mode described above. The request judging section 17A, based on display priority being managed in an application information managing section 15, present state of overlapping of each of the windows W1, W2, and W3, and the display mode, judges whether the window control request from each of the application programs AP1, AP2, and AP3 is executed and produces a result from the judgement. In the second embodiment in particular, when preset display priority of an application program that has originally made a window control request is higher than that of a window W1, W2, or W3 being displayed in a highest location on the screen of the display section 13 and the display mode instructs a window W1, W2, or W3 to be displayed, produces a result of the judgement that the window control request is allowed to be executed and if the display priority of the application program that has originally made the window control request is lower than that of the window W1, W2, or W3 being displayed in the highest location on the screen of the display section 13 or the display mode instructs a window W1, W2, or W3 not be displayed, produces a result of the judgement that the window control request is not allowed to be executed. Other components shown in Fig. 6 have same configurations as the components shown in Fig. 1.

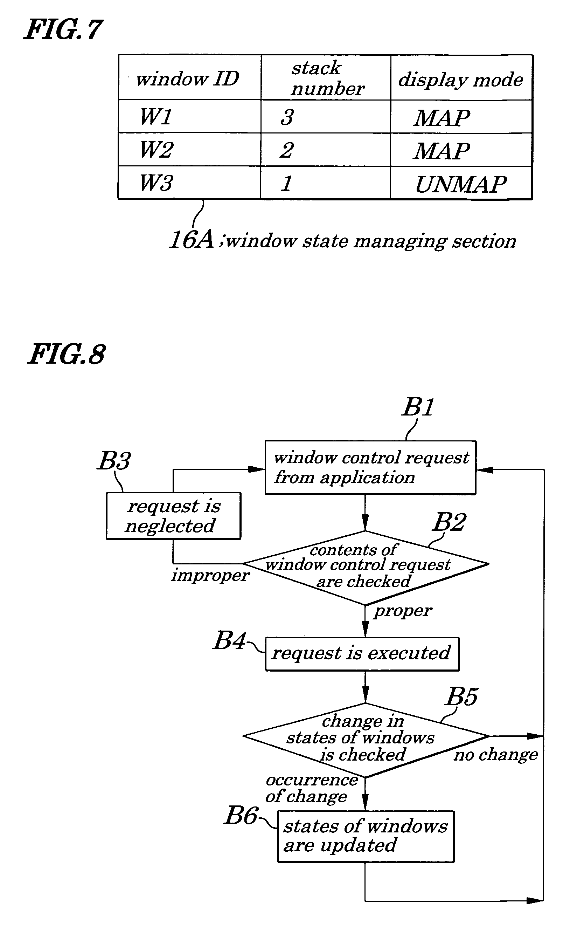

Figure 7 is a diagram showing information being managed by the window state managing section 16A of Fig. 6. In the window state managing section 16A, in addition to information that is provided in the first embodiment shown in Fig. 3A, has information about a state of "display mode" for the windows W1, W2, or W3. The display mode is set by each of the application programs AP1, AP2, and AP3 and the display mode provides two states of "MAP" (display) and "UNMAP" (not display). When the display mode is set to "UNMAP" (not display), even if setting is done so that a corresponding window W1, W2, or W3 is placed in a highest location on the screen, the window W1, W2, or W3 is not displayed on the screen and, only when the display mode is set to "MAP" (display), the window W1, W2, or W3 is displayed on the screen.

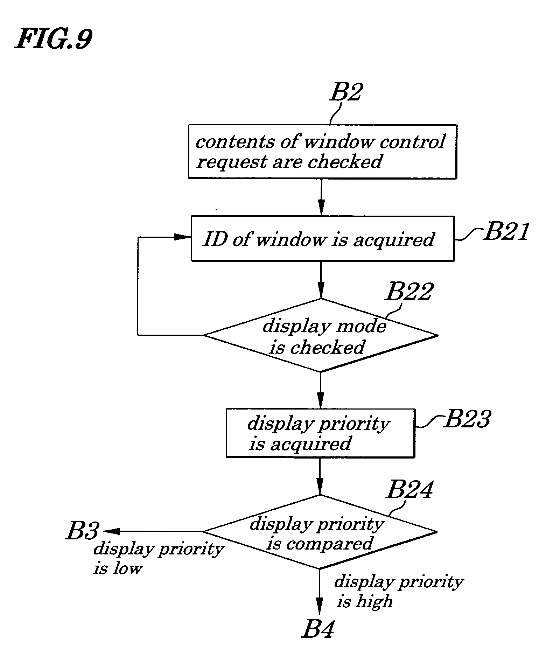

Figures 8 and 9 are flowcharts explaining operations of the multi-window display device 11A of Fig. 6. Processing contents of the multi-window managing method of the second embodiment are described by referring to Figs. 8 and 9. As in the case of the first embodiment, for example, when a widow control request asking the window W1 placed in a lowest location on the screen to be moved to its highest location from the application program AP1 occurs in the window manager 12A, a request inputting section 14 in the window manager 12A receives the window control request from the application program AP1 and transfers it to the request judging section 17A (Step B1).

The request judging section 17A judges whether or not the window control request from the application program AP1 is allowed to be executed (Step B2). The request judging section 17A, when judging that, if the window control request is executed, a problem occurs (that is, when judging the execution to be improper), neglects the window control request (Step B3) and waits for a new window control request from the application programs AP1, AP2, and AP3 (Step B1). The request judging section 17, when judging that, if the window control request is executed, no problem occurs (that is, when judging the execution to be proper), transmits contents of the window control request to a window controlling section 18 so as to execute the window control request (Step B4).

The request judging section 17A, after having executed the window control request, checks change in states of the windows W1, W2, and W3 (Step B5) and, if no change has occurred, terminates the processing and waits for a new request from the application programs AP1, AP2, and AP3 (Step B1). The request judging section 17A, when change has occurred in states of the windows W1, W2, and W3, transmits information indicating occurrence of the change to the window state managing section 16A. The window state managing section 16A then updates information about stack number and display mode as shown in Fig. 7 (Step B6) and waits for a new window control request from application programs AP1, AP2, and AP3 (Step B1).

In the Step B2, as shown in Fig. 9 and Fig. 7, the request judging section 17A first acquires an ID (W3) of a window corresponding to a smallest stack number (that is, the highest position on the screen) from the window state managing section 16A (Step B21). Next, the request judging section 17A checks a state of the display mode for the window W3 (Step B22) and, if the display mode is in an UNMAP (not display) state, acquires an ID (W2) of a window having a next smallest stack number (Step B21) . When a window for which the display mode is in a MAP (display) state is found, the request judging section 17A acquires display priority "9" of the application program AP2 to which the window W2 belongs and display priority "7" of the application program AP1 to which the window W1 belongs (Step B23), as shown in Fig. 2 and compares the acquired priorities "7" and "9" (Step B24).

As a result, when the display priority of the application program AP1 is higher than the display priority of the application program AP2, the request judging section 17A judges that execution of the request from the application program AP1 causes no problem and, if the above display priority is lower than the above display priority, judges that execution of the request causes interference in display of the application program having higher display priority and therefore the request should not be executed. In the second embodiment, the display mode for the window W3 being placed in a highest location on the screen is in the UNMAP (not display) state, a window having the next smallest stack number and whose display mode is in the MAP (display) state is the window W2. the display priority of the application program AP2 to which the window W2 belongs is allocated "9" which is lower than the display priority "7" of the application program AP1 to which the window W1 belongs and therefore it is judged that no problem occurs when the request is executed and the window control request from the application program AP1 is executed by the window controlling section 18.

Thus, the multi-window display device of the second embodiment has a merit, in addition to the merit obtained in the first embodiment, in that, since the window state managing section 16A of the second embodiment is additionally provided with the function of the "display mode" for displaying of windows W1, W2, and W3, no window having been instructed by the function not to be displayed appears on the screen, which enables smooth displaying of the windows W1, W2, and W3.

It is apparent that the present invention is not limited to the above embodiments but may be changed and modified without departing from the scope and spirit of the invention. For example, in each of the above embodiments, examples are described in which the portable cellular phone is used as the multi-window display devices 11 and 11A. However, the present invention may be applied to all devices using multi-windows including, for example, a PDA (Personal Digital Assistant), personal computer, or a like. Moreover, any number of application programs or windows may be employed in the present invention.

## Claims

1. A multi-window display device comprising:
a display device (13);
a window manager (12) to display, in response to a window control request from any one of two and more application programs (AP1, AP2, and AP3), each of which corresponds to any one of two or more windows (W1, W2, and W3) in a one-to-one relationship, said two or more windows (W1, W2, and W3) on said display device (13) by having said two or more windows (W1, W2, and W3) overlap one another while controlling display priority of each of said two or more windows (W1, W2, and W3); and
wherein said window manager (12) judges whether a window control request from the application program corresponding to any one of said two or more windows (W1, W2, and W3) being displayed is allowed to be executed or not, based on preset display priority of the application program that has made said window control request and, if a result of the judgement shows that said window control request is allowed to be executed, executes said window control request and preferentially displays said any one of said two or more windows (W1, W2, and W3) and, if said result of said judgement shows that said window control request is not allowed to be executed, neglects said window control request.

2. The multi-window display device according to Claim 1, **characterized in that** said window manager (12) comprises:
an application information managing section (15) to manage display priority of each of said application programs (AP1, AP2, and AP3) and each of said two or more windows (W1, W2, and W3) ;
a window state managing section (16) to mange a present state of overlapping of each of said two or more windows (W1, W2, and W3) in a display screen of said display device (13);
a request judging section (17) judges, based on said display priority managed by said application information managing section (15) and on a present state of overlapping of each of said two or more windows (W1, W2, and W3) being managed by said window state managing section (16), whether or not said window control request from said application program is allowed to be executed; and
a window control section (18) controls each of said two or more windows (W1, W2, and W3) on said display screen of said display device (13) based on said result of said judgement.

3. The multi-window display device according to Claim 2, **characterized in that** said request judging section (17), when said display priority of said application program that has made said window control request is higher than that of a window being displayed in a highest location on said display screen of said display device (13), produces a result from said judgement that said window control request is allowed to be executed and when said display priority of said application program that has made said window control request is lower than that of said window being displayed in a highest location on said display screen of said display device (13), produces a result from said judgement that said window control request is not allowed to be executed.

4. A multi-window display device comprising:
a display device (13);
a window manager (12) to display, in response to a window control request from any one of two and more application programs (AP1, AP2, and AP3), each of which corresponds to any one of two or more windows (W1, W2, and W3) in a one-to-one relationship, said two or more windows (W1, W2, and W3) on said display device (13) by having said two or more windows (W1, W2, and W3) overlap one another while controlling display priority of each of said two or more windows (W1, W2, and W3); and
wherein said window manager (12) judges whether or not a window control request from the application program corresponding to any one of said two or more windows (W1, W2, and W3) being displayed is allowed to be executed, based on preset display priority of the application program that has made said window control request, and on a function of a display mode to instruct a window to be displayed or not to be displayed and, if a result of the judgement shows that said window control request is allowed to be executed, executes said window control request and preferentially displays said any one of said two or more windows (W1, W2, and W3) and, if a result of said judgement shows that said window control request is not allowed to be executed, neglects said window control request.

5. The multi-window display device according to Claim 4, **characterized in that** said window manager (12) comprises:
an application information managing section (15) to manage display priority of each of said application programs (AP1, AP2, and AP3) and each of said two or more windows (W1, W2, and W3);
a window state managing section (16A) to mange a present state of overlapping of each of said two or more windows (W1, W2, and W3) on a display screen of said display device (13) and said display mode;
a request judging section (17A) judges, based on said display priority being managed, a present state of overlapping of each of said two or more windows (W1, W2, and W3) being managed, and said display mode being managed, whether or not said window control request from said application program is allowed to be executed; and
a window control section (18) controls each of said two or more windows (W1, W2, and W3) on said display screen of said display device (13) based on said result of said judgement.

6. The multi-window display device according to Claim 5, **characterized in that** said request judging section (17A), when said display priority of said application program that has made said window control request is higher than that of a window being displayed in a highest location on said display screen of said display device (13) and a function of said display mode instructs a window to be displayed, produces a result from said judgement that said window control request is allowed to be executed and when said display priority of said application program that has made said window control request is lower than that of said window being displayed in a highest location on said display screen of said display device (13) or said function of said display mode instructs said window not to be displayed, produces a result from said judgement that said window control request is not allowed to be executed.

7. A multi-window managing method being used in a multi-window display device having a display device (13) and a window manager (12) to display, in response to a window control request from any one of two and more application programs (AP1, AP2, and AP3), each of which corresponds to any one of two or more windows (W1, W2, and W3) in a one-to-one relationship, said two or more windows (W1, W2, and W3) on said display device (13) by having said two or more windows (W1, W2, and W3) overlap one another while controlling display priority of each of said two or more windows (W1, W2, and W3), for managing a state of overlapping of each of said two or more windows (W1, W2, and W3), said multi-window managing method comprising;
a step of judging whether a window control request from the application program corresponding to any one of said two or more windows (W1, W2, and W3) being displayed on said display device (13) is allowed to be executed or not, based on preset display priority of the application program that has made said window control request and, if a result of the judgement shows that said window control request is allowed to be executed, executing said window control request and preferentially displaying said any one of said two or more windows (W1, W2, and W3) and, if said result of said judgement shows that said window control request is not allowed to be executed, neglecting said window control request.

8. A multi-window managing method being used in a multi-window display device having a display device (13) and a window manager (12) to display, in response to a window control request from any one of two and more application programs (AP1, AP2, and AP3) , each of which corresponds to any one of two or more windows (W1, W2, and W3) in a one-to-one relationship, said two or more windows (W1, W2, and W3) on said display device (13) by having said two or more windows (W1, W2, and W3) overlap one another while controlling display priority of each of said two or more windows (W1, W2, and W3), for managing a state of overlapping of each of said two or more windows (W1, W2, and W3), said multi-window managing method comprising;
a step of judging whether or not a window control request from the application program corresponding to any one of said two or more windows (W1, W2, and W3) being displayed on a screen of said display section (13) is allowed to be executed, based on preset display priority of the application program that has made said window control request and on a function of a display mode to instruct a window to be displayed or not to be displayed and, if a result of the judgement shows that said window control request is allowed to be executed, executing said window control request and preferentially displaying said any one of said two or more windows (W1, W2, and W3) and, if a result of said judgement shows that said window control request is not allowed to be executed, neglecting said window control request.

9. A display control program to have a computer achieve a multi-window managing method being used in a multi-window display device having a display device (13) and a window manager (12) to display, in response to a window control request from any one of two and more application programs (AP1, AP2, and AP3), each of which corresponds to any one of two or more windows (W1, W2, and W3) in a one-to-one relationship, said two or more windows (W1, W2, and W3) on said display device (13) by having said two or more windows (W1, W2, and W3) overlap one another while controlling display priority of each of said two or more windows (W1, W2, and W3), for managing a state of overlapping of each of said two or more windows (W1, W2, and W3), said multi-window managing method comprising;
a step of judging whether a window control request from the application program corresponding to any one of said two or more windows (W1, W2, and W3) being displayed on said display device (13) is allowed to be executed or not, based on preset display priority of the application program that has made said window control request and, if a result of the judgement shows that said window control request is allowed to be executed, executing said window control request and preferentially displaying said any one of said two or more windows (W1, W2, and W3) and, if said result of said judgement shows that said window control request is not allowed to be executed, neglecting said window control request.

10. A display control program to have a computer achieve a multi-window managing method being used in a multi-window display device having a display device (13) and a window manager (12) to display, in response to a window control request from any one of two and more application programs (AP1, AP2, and AP3), each of which corresponds to any one of two or more windows (W1, W2, and W3) in a one-to-one relationship, said two or more windows (W1, W2, and W3) on said display device (13) by having said two or more windows (W1, W2, and W3) overlap one another while controlling display priority of each of said two or more windows (W1, W2, and W3), for managing a state of overlapping of each of said two or more windows (W1, W2, and W3), said multi-window managing method comprising;
a step of judging whether or not a window control request from the application program corresponding to any one of said two or more windows (W1, W2, and W3) being displayed on a screen of said display section (13) is allowed to be executed, based on preset display priority of the application program that has made said window control request and on a function of a display mode to instruct a window to be displayed or not to be displayed and, if a result of the judgement shows that said window control request is allowed to be executed, executing said window control request and preferentially displaying said any one of said two or more windows (W1, W2, and W3) and, if a result of said judgement shows that said window control request is not allowed to be executed, neglecting said window control request.
